# EUROPÄISCHE PATENTANMELDUNG

(11) **EP 0 898 092 A2**
(43) Veröffentlichungstag der Anmeldung: **24.02.1999**
(21) Anmeldenummer: 98113256.6
(22) Anmeldetag: 16.07.1998
(51) Int. Cl.: F16F 9/48

(54) **Gasfeder**

(30) Priorität: 20.08.1997 DE 19736074
(71) Anmelder: Krupp Bilstein GmbH, 58256 Ennepetal (DE)
(72) Erfinder: Hornea, Valeriu Puiu, 2400 Sibiu (RO)

(57) **Zusammenfassung**

Um eine Gasfeder, bestehend aus einem einseitig geschlossenen Zylinderrohr (1) und einer hierin eintauchenden Kolbenstange (4), an deren Ende (5) ein, das Zylinderrohr (1) in zwei Arbeitsräume (6, 7) teilender Arbeitskolben (11) befestigt ist, wobei die Kolbenstange (4) rohrförmig mit einem in das Zylinderrohr (1) eintauchenden offenen Ende (5) ausgebildet ist und das offene Ende des Zylinderrohrs (1) durch ein an der Kolbenstange (4) anliegendes Dichtungs- und Führungspaket (25) abgeschlossen ist, wobei der Mantel des Zylinderrohrs (1) mit einer sich nach außen erstreckenden, in Längsrichtung verlaufenden Nut (20) ausgebildet ist und wobei der Arbeitskolben (11) an seinem Außenumfang einen längsverschieblichen, abdichtenden Kolbenring (18) aufweist, der beim Einfahren des Arbeitskolbens (11) in das Zylinderrohr (1) einen Bypass (19) zwischen den Arbeitsräumen (6, 7) freigibt, zu schaffen, die mit einfachen Mitteln eine große Variabilität in bezug auf die Anpassung an die verschiedensten Einsatzfälle aufweist, wobei diese darüber hinaus leicht sein soll und ein hohes Gasvolumen bei einer kleinen Baugröße speichern kann, weist die Nut (20) eine Länge entsprechend dem Gesamthub der Gasfeder auf, wobei der Innenraum der rohrförmig ausgebildeten Kolbenstange (4) keine Einbauten trägt und auch keine eintauchenden Bauteile aufnimmt.

## Beschreibung

Die Erfindung betrifft eine Gasfeder, bestehend aus einem einseitig geschlossenen Zylinderrohr und einer hierin eintauchenden Kolbenstange, an deren Ende ein, das Zylinderrohr in zwei Arbeitsräume teilender Arbeitskolben befestigt ist, nach dem Oberbegriff des Anspruchs 1.

Derartige Gasfedern werden bevorzugt zur Kraftunterstützung beim Öffnen von Fahrzeugklappen, insbesondere von Fahrzeugheckklappen bei Kombis und Transportern eingesetzt. Sie besitzen über den gesamten Öffnungswinkelbereich eine Kraftunterstützung für den Benutzer. Je nach Einsatzbereich soll jedoch eine unterschiedliche Unterstützungskraft gewählt werden, die auch noch beim Öffnen und Schließen der Fahrzeugheckklappe unterschiedlich groß sein soll.

Die EP 0 768 476 A1 zeigt eine derartige Gasfeder.

Nachteilig bei dieser Gasfeder ergibt sich, daß sie aufwendig hergestellt ist und ein relativ hohes Gewicht hat.

Der Erfindung liegt die Aufgabe zugrunde, eine einfache Gasfeder zu entwickeln, die mit einfachen Mitteln eine große Variabilität in bezug auf die Anpassung an die verschiedensten Einsatzfälle aufweist. Darüber hinaus soll sie leicht sein und ein hohes Gasvolumen bei einer kleinen Baugröße speichern können.

Diese Aufgabe wird erfindungsgemäß durch eine Gasfeder mit den Merkmalen des Anspruchs 1 gelost. Vorteilhafte Aus- und Weiterbildungen sind in den Ansprüchen 2 bis 11 beschrieben.

Die erfindungsgemäße Gasfeder ist aus einfachen Bauteilen zusammengesetzt und kann auf einfache Weise montiert werden. Dabei besitzt sie ein geringes Gewicht und kann ein großes Gasvolumen aufnehmen. Besonders vorteilhaft ergibt sich, daß beim Einfahren der hohlen Kolbenstange nur ein geringes Gasvolumen verdrängt wird.

Ein Ausführungsbeispiel der Erfindung ist in der Zeichnung dargestellt und wird im folgenden näher beschrieben.

Es zeigen
- Fig. 1: einen Längsschnitt durch die Gasfeder,
- Fig. 2: einen Querschnitt durch das Zylinderrohr der Gasfeder nach Fig. 1,
- Fig. 3 und 4: Einzelheiten bezüglich der Gasströmung am Arbeitskolben und
- Fig. 5: eine alternative Ausbildung des Arbeitskolbens.

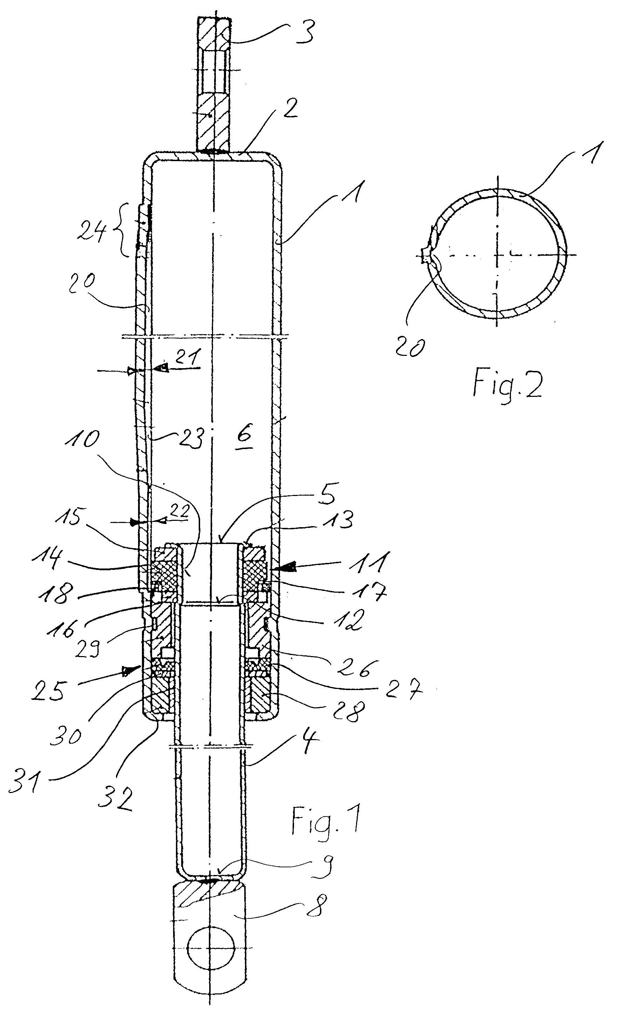

Die Gasfeder, wie sie in Fig. 1 dargestellt ist, weist ein einseitig geschlossenes Zylinderrohr 1 auf. Am Boden 2 des Zylinderrohrs 1 ist eine Befestigungsvorrichtung 3 angebracht, mit der sie an der Tür oder der Fahrzeugkarosserie befestigt wird. In das offene Ende des Zylinderrohrs 1 taucht eine Kolbenstange 4 ein, die an ihrem eintauchenden Ende 5 einen Arbeitskolben 11 trägt, der den Innenraum des Zylinderrohrs 1 in zwei Arbeitsräume 6, 7 trennt. An seinem außenliegenden Ende ist die Kolbenstange 4 ebenfalls mit einer Befestigungsvorrichtung 8 ausgebildet, die dem gleichen Zweck wie die Befestigungsvorrichtung 3 am Zylinderrohr 1 dient.

Auch die Kolbenstange 4 ist als Rohr mit einem geschlossenen Boden 9 ausgebildet. Bei der Kolbenstange 4 ist die Öffnung am eintauchenden Ende 5 angeordnet. Der dortige Endbereich 10 der rohrförmigen Kolbenstange 4 ist etwa über die Länge des Arbeitskolbens 11 auf einen geringeren Durchmesser reduziert, so daß am Übergang zwischen dem geringeren Durchmesser und dem normalen Durchmesser der Kolbenstange 4 eine Anlageschulter 12 entsteht. Auf dem durchmesserreduzierten Endbereich 10 ist der Arbeitskolben 11 aufgesetzt. Er stützt sich einerseits gegen die Anlageschulter 12 ab und wird andererseits durch eine Bördelung 13 am offenen Ende 5 der Kolbenstange 4 gehalten. Im Ausführungsbeispiel ist diese Bördelung 13 als radial nach außen gebogene Ringscheibe ausgebildet.

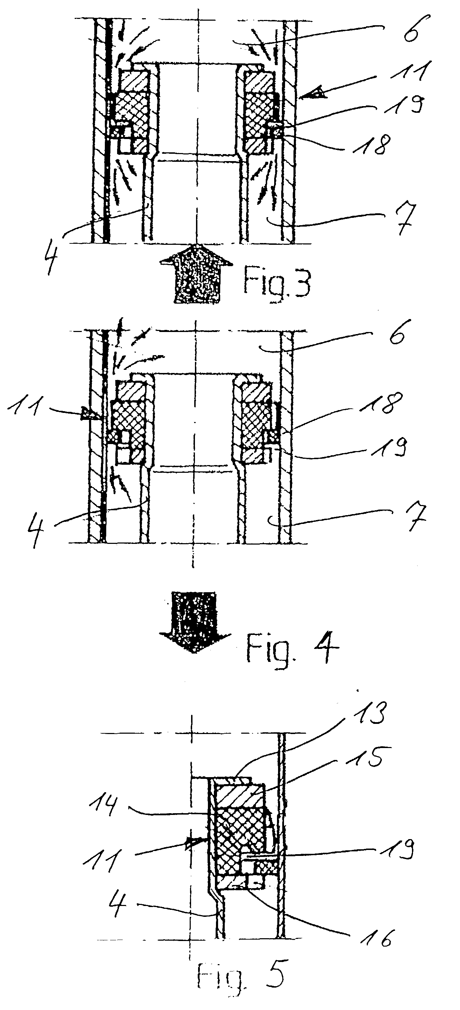

Wie aus Fig. 1 in Verbindung mit den Figuren 3 und 4 erkennbar ist, ist der Arbeitskolben 11 mehrteilig ausgebildet. Er weist einen zentralen Bereich 14 aus Kunststoff auf, der endseitig zwischen zwei Haltescheiben 15, 16 liegt. In einer umlaufenden Rille 17 ist ein Kolbenring 18 angeordnet. Dabei ist vorgesehen, daß die Rille 17 eine größere Breite aufweist als der Kolbenring 18, so daß der Kolbenring 18 sich innerhalb der Rille 17 axial bewegen kann. Da der Kolbenring 18 an der Innenseite des Zylinderrohrs 1 anliegt und auch radial in der Rille 17 eine Freiheit aufweist, kann er sich relativ zum Arbeitskolben 11 bewegen. Diese Relativbewegung hängt von der Bewegung des Arbeitskolbens 11 gegenüber dem Zylinderrohr 1 ab. Durch die Anordnung eines Bypasses 19 in Verbindung mit dem Innendurchmesser der Rille 17 am Arbeitskolben 11 wird erreicht, daß bei Einschieben der Kolbenstange 4 in das Zylinderrohr 1 eine zusätzliche Durchflußöffnung für das Gas aus dem Arbeitsraum 6 in den Arbeitsraum 7 freigegeben wird, wie dieses in Fig. 3 gezeigt ist. Durch Anlage des Kolbenrings 18 an der anderen, nicht unterbrochenen Schulter der Rille 17 beim Herausziehen der Kolbenstange 4 aus dem Zylinderrohr 1, wie in Fig. 4 gezeigt, ist die Bypassöffnung verschlossen. Wie Fig. 5 zeigt, kann der zentrale Bereich 14 des Arbeitskolbens 11 eine zum Ende 5 der Kolbenstange 11 hin teilweise konisch ausgebildete Oberflächenform aufweisen. Dieses erleichtert den Ausgleich von Fertigungsungenauigkeiten.

Die Hauptregelung der Dämpfungs- und Federkraft der Gasfeder erfolgt über den Gasaustausch zwischen den Arbeitsräumen 6 und 7 durch einen nicht vom Arbeitskolben 11 verschlossenen Kanal. Nach der Erfindung ist dieser Kanal als sich nach außen erstreckende, an der Innenwand des Zylinderrohrs 1 in Längsrichtung verlaufende Nut 20 ausgebildet. Zur Bildung dieser Nut 20 ist die Wandung des Zylinderrohrs 1 örtlich nach außen gebeult, wie dieses der Fig. 2 deutlich zu entnehmen ist. Der Übergang von der Innenoberfläche des Zylinderrohrs 1 zur Nutseitenkante wird dabei vorzugsweise abgerundet gestaltet, um einen Verschleiß am Kolbenring 18 zu vermeiden. Nach der Erfindung ist vorgesehen, daß sich die Nut 20 in Längsrichtung über den Gesamthub der Gasfeder erstreckt. Zur Steuerung unterschiedlicher Dämpfungs- und Federungswerte ist die Nut 20 nach dem gezeigten Ausführungsbeispiel über ihre Länge mit unterschiedlichen Tiefen 21, 22 ausgebildet. In gleicher Weise kann jedoch auch die Breite der Nut 20 oder sowohl die Tiefe 21, 22 als auch die Breite über die Länge der Nut 20 variieren. Wie aus Fig. 1 erkennbar ist, ist es vorgesehen, daß die unterschiedlichen Tiefen 21, 22 über eine vorgesehene Länge gleichbleiben. Der Übergang 23 zwischen den unterschiedlichen Tiefen 21, 22 ist im Ausführungsbeispiel gemäß Fig. 1 linear gestaltet. Je nach den Erfordernissen kann der Übergang jedoch auch, beispielsweise parabolisch gestaltet sein. Dann würde sich der Dämpfungskennlinienverlauf linear verändern, da sich der Querschnitt der Nut 20 quadratisch verändert. Das gleiche würde erreicht werden, wenn Tiefe und Breite der Nut 20 gleichzeitig linear verändert würden. Eine entsprechende Ausbildung der Nut 20 mit unterschiedlicher Tiefe ist auch in der Nähe des Bodens 2 des Zylinderrohrs 1 im Bereich 24 vorgesehen.

Am offenen Ende des Zylinderrohrs 1 ist ein Dichtungs- und Führungspaket 25 angeordnet. Es besteht aus einem Fixierring 26, einer Dichtung 27 und einem Führungsring 28. Der Fixierring 26, dessen Innenbohrung größer ist als der Außendurchmesser der Kolbenstange 4, weist am Außenumfang eine umlaufende Nut 29 auf. In diese Nut 29 wird das Zylinderrohr 1 eingesickt, so daß dadurch eine feste Verbindung zwischen Zylinderrohr 1 und Fixierring 26 entsteht. Nach außen an den Fixierring 26 anliegend ist eine Dichtung 27 angeordnet, dessen Dichtlippe von einer Abstützscheibe 30 lageunterstützt wird. Das Dichtungs- und Führungspaket 25 wird durch den Führungsring 28 abgeschlossen, an dessen Innendurchmesser eine Gleitbuchse 31 aus einem besonders gleitfähigen und verschleißfähigen Material angebracht ist. Das Dichtungs- und Führungspaket 25 wird am offenen Ende des Zylinderrohrs 1 zusätzlich zu der in die Nut 29 des Fixierrings 26 eingreifenden Sicke durch eine Bördelung 32 des Endes des Zylinderrohrs 1 nach innen gehalten. Durch diese Bördelung 32 werden auch die Einzel- elemente des Dichtungs- und Führungspakets 25 zusammengehalten.

Wie der vorstehenden Beschreibung bereits zu entnehmen ist, ergibt sich durch die vorstehend beschriebene Gestaltung der Gasfeder eine äußerst einfache und materialsparende Montage. Darüber hinaus gestaltet sich der Aufbau des Arbeitskolbens 11 äußerst einfach, da er keine Durchlässe und Ventilscheiben benötigt.

Die Montage des Arbeitskolbens 11 auf die Kolbenstange 4 erfolgt durch Aufschieben von Haltescheibe 16, Kolbenring 18, zentralem Bereich 14 und Haltescheibe 15 auf den Endbereich 10 mit verringertem Durchmesser der Kolbenstange 4 und anschliessender Herstellung der Bördelung 13.

In ähnlicher Weise erfolgt die Montage des Dichtungs- und Führungspakets 25 am offenen Ende des Zylinderrohrs 1. Nach Einbringen der mit dem Arbeitskolben 11 versehenen Kolbenstange 4 in das Zylinderrohr 1 wird der Fixierring 26 lagerichtig im Zylinderrohr 1 gehalten und durch Einsicken der Wand des Zylinderrohrs 1 in die Nut 29 des Fixierrings 26 gegenüber dem Zylinderrohr 1 fixiert. Die weitere Montage erfolgt durch Einlegen der Dichtung 27, mit der Abstützscheibe 30 und dem Einbringen des Führungsrings 28. Mit der Herstellung der Bördelung 32 ist der Montagevorgang abgeschlossen.

### Bezugszeichenliste

- 1: Zylinderrohr
- 2: Boden
- 3: Befestigungsvorrichtung
- 4: Kolbenstange
- 5: Ende
- 6: Arbeitsraum
- 7: Arbeitsraum
- 8: Befestigungsvorrichtung
- 9: Boden
- 10: Endbereich
- 11: Arbeitskolben
- 12: Anlageschulter
- 13: Bördelung
- 14: zentraler Bereich
- 15: Haltescheibe
- 16: Haltescheibe
- 17: Rille
- 18: Kolbenring
- 19: Bypass
- 20: Nut
- 21: Tiefe
- 22: Tiefe
- 23: Übergang
- 24: Bereich
- 25: Dichtungs- und Führungspaket
- 26: Fixierring
- 27: Dichtung
- 28: Führungsring
- 29: Nut
- 30: Abstützscheibe
- 31: Gleitbuchse
- 32: Bördelung

## Patentansprüche

1. Gasfeder, bestehend aus einem einseitig geschlossenen Zylinderrohr (1) und einer hierin eintauchenden Kolbenstange (4), an deren Ende (5) ein, das Zylinderrohr (1) in zwei Arbeitsräume (6, 7) teilender Arbeitskolben (11) befestigt ist, wobei die Kolbenstange (4) rohrförmig mit einem in das Zylinderrohr (1) eintauchenden offenen Ende (5) ausgebildet ist und das offene Ende des Zylinderrohrs (1) durch ein an der Kolbenstange (4) anliegendes Dichtungs- und Führungspaket (25) abgeschlossen ist, wobei der Mantel des Zylinderrohrs (1) mit einer sich nach außen erstreckenden, in Längsrichtung verlaufenden Nut (20) ausgebildet ist und wobei der Arbeitskolben (11) an seinem Außenumfang einen längsverschieblichen, abdichtenden Kolbenring (18) aufweist, der beim Einfahren des Arbeitskolbens (11) in das Zylinderrohr (1) einen Bypass (19) zwischen den Arbeitsräumen (6, 7) freigibt,
**dadurch gekennzeichnet,**
daß die Nut (20) eine Länge entsprechend dem Gesamthub der Gasfeder aufweist und der Innenraum der rohrförmig ausgebildeten Kolbenstange (4) keine Einbauten trägt und auch keine eintauchenden Bauteile aufnimmt.

2. Gasfeder nach Anspruch 1,
**dadurch gekennzeichnet,**
daß die Nut (20) mit einer über ihre Länge unterschiedlichen Tiefe (21, 22) und/oder einem über ihre Länge unterschiedlichen Querschnitt ausgebildet ist.

3. Gasfeder nach Anspruch 2,
**dadurch gekennzeichnet,**
daß der Übergang (23) zur unterschiedlichen Tiefe (21, 22) bzw. zum unterschiedlichen Querschnitt linear erfolgt.

4. Gasfeder nach Anspruch 2,
**dadurch gekennzeichnet,**
daß der Übergang (23) zur unterschiedlichen Tiefe (21, 22) bzw. zum unterschiedlichen Querschnitt parabolisch erfolgt.

5. Gasfeder nach einem oder mehreren der Ansprüche 2 bis 4,
**dadurch gekennzeichnet,** daß die Nut (20) wenigstens zwei Abschnitte mit unterschiedlicher, aber jeweils gleichbleibender Tiefe (21, 22) aufweist.

6. Gasfeder nach einem oder mehreren der Ansprüche 1 bis 5,
**dadurch gekennzeichnet,**
daß das Dichtungs- und Führungspaket (25) am Innendurchmesser eine Gleitbuchse (31) trägt.

7. Gasfeder nach einem oder mehreren der Ansprüche 1 bis 6,
**dadurch gekennzeichnet,**
daß die Mantelfläche des Arbeitskolbens (11) in Richtung zum Ende (5) der Kolbenstange (4) hin sich verjüngend konisch ausgebildet ist.

8. Gasfeder nach einem oder mehreren der Ansprüche 1 bis 7,
**dadurch gekennzeichnet,**
daß das Verhältnis von Kolbenstangenwandstärke zu Kolbenstangendurchmesser kleiner ist als 0,15.

9. Gasfeder nach einem oder mehreren der Ansprüche 1 bis 8,
**dadurch gekennzeichnet,**
daß der Durchmesser der Kolbenstange (4) am arbeitskolbenseitigen Ende (5) bei etwa gleichbleibender Wandstärke reduziert und der Arbeitskolben (11) auf diesem reduzierten Endbereich (10) angeordnet ist.

10. Gasfeder nach Anspruch 9,
**dadurch gekennzeichnet,**
daß der Arbeitskolben (11) einerseits an einer Anlageschulter (12) am Übergang zum größeren Durchmesser der Kolbenstange (4) anliegt und andererseits durch eine nach außen gerichtete Bördelung (13) des Endes (5) der Kolbenstange (4) gehalten wird.

11. Gasfeder nach Anspruch 10,
**dadurch gekennzeichnet,**
daß sich die Bördelung (13) radial nach außen erstreckt.
